# EUROPEAN PATENT SPECIFICATION

(11) **EP 1 578 123 B1**
(45) Date of publication and mention of the grant of the patent: **02.10.2013**
(21) Application number: 05447055.4
(22) Date of filing: 15.03.2005
(51) Int. Cl.: H04N 5/74, H04N 9/31, G02B 27/14

(54) **Projector system comprising pulsed light sources**
Projektionssystem mit gepulsten Lichtquellen
Système de projection aux sources lumineuses pulsées

(30) Priority: 15.03.2004 GB 0405747; 30.09.2004 US 614839 P
(43) Date of publication of application: 21.09.2005
(73) Proprietor: IMEC, 3001 Leuven (BE); Universiteit Gent, 9000 Gent (BE)
(72) Inventor: De Smet, Herbert, 9070 Destelbergen (BE)
(74) Representative: Van Malderen, Joëlle

(56) References cited:
- EP-A- 0 888 016
- EP-A- 1 395 064
- WO-A-00/46631
- WO-A-2004/031850
- US-A- 2 761 350
- US-A1- 2003 021 519
- US-A1- 2004 041 744
- US-A1- 2005 128 436

## Description

### Field of the invention

The present invention is related to a LED based projector system.

### State of the art

Micro display technology is in most cases based on liquid crystal or MEMS technology. Typical projectors based on these technologies are the Liquid Crystal On Silicon (LCOS), Liquid Crystal Display (LCD) and Digital Light Processing (DLP^{TM}) projectors. In all these projectors the light source is practically always an Ultra High Performance (UHP) discharge arc lamp. This lamp has a very high power efficiency (lumen per watt) and étendue efficiency (lumen per unit étendue). Because of its small arc length, thus small étendue, it is very attractive for small light valves in micro display projectors.

An important property of any light beam is its étendue. It is a purely geometrical property. In simple wordings, it is the product of the beam cross-section with the spatial angle under which it travels and can be determined by multiplying the diameter or width of the limiting aperture by the angle of divergence of that aperture. The unit of étendue is m²×steradians. From optics theory it follows that the étendue of a beam of light is invariant. If an optical component reduces the étendue of a beam of light, then this automatically implies that some of the light is lost. In a light valve projector, the importance of the étendue is that the optical component with the smallest étendue acceptance acts like a bottleneck for the whole system.

In a well-designed optical system, the étendue acceptances of all optical components are matched with each other. Usually, one of the components determines the étendue of the whole system and the others are matched to this component.

In light valve projectors, the light valve itself tends to be the étendue limiting component. That is a direct consequence of the facts that the price of the light valve component increases very rapidly with its dimensions, and that the light acceptance angle of the light valve is limited if a minimum image contrast is required.

The major consequence of this is that also the étendue of the matching light source is limited, which means that if one wants to increase the light output of the projector, one has to increase the light output of the light source without increasing its size or emission angles.

There are different types of LCOS color projectors, e.g. single panel (color sequential) and three panel systems. There are several known optical architectures for e.g. the three panel system. White light from the UHP lamp is, after some filtering, divided in three basic colors (R, G, B) by a set of dichroic mirrors. Afterwards, each color is independently modulated by another LCOS micro display (light valve). A so-called X-cube combines the three light paths and reflects the image to the projection lens.

This architecture where an UHP lamp is used as light source has many disadvantages. White light has to be divided into its basic components. For this, three dichroic mirrors are needed. This raises the price and enlarges the dimensions of the projector. Presence of UV and IR filters also raises the price. Each component has some losses, so the total optical output will be decreased. After splitting in (R, G, B)-components, each color still has a relatively wide spectrum and this leads to a reduced color gamut.

Another important disadvantage of an UHP lamp is the short lifetime. Normally a component has an average lifetime of 25000 hours. UHP lamps, with 5000 hours, limit the projector lifetime drastically. The other components have a much longer lifetime, therefore it would be advantageous to provide another light engine that is operating for a longer time.

Other disadvantages are the high driving voltage, large volume due to cooling, price, the presence of mercury and danger of explosion. These aspects make the projector also less portable.

There is a great interest in using LEDs (light emitting diodes) or lasers as the light source for a future generation of image projectors. LEDs and lasers have a number of advantages over the now widely used UHP lamps, such as longer lifetime, no explosion hazard, no risk of toxic exhaust at end of life (cf. Hg in UHP lamps), shock resistance, lightweight, very pure basic colours (narrowband) (resulting in a wider colour gamut), possibility to use pulsed addressing (important for colour-sequential operation), and no waste of energy to produce photons with wavelengths that are unwanted (wavelengths between the primary colours).

The major drawback of LEDs to date is the limited light output per unit of emitting area. This is an important limitation for a light source that is considered for use in a light valve based projector.

In recent years, LEDs have become more and more efficient. Many methods to increase the efficiency are based on modifications of the direct LED surroundings (substrate, encapsulation, ...) in order to increase the light out-coupling efficiency. These methods as a rule also increase the apparent size of the LEDs, and hence their étendue. Therefore, this does not beneficially influence the efficiency of such a LED in a projection system, unless the étendue of the enlarged LED still matches with the étendue acceptance of the light valve. Nowadays, the maximum LED power that matches with a typical LCOS light valve (0.8" diagonal) is about 5 Watts.

LEDs are robust and have very long operating time (up to 100k hours) compared with UHP lamp. This will enlarge the lifetime of the projector drastically. Because of their small size, low operating voltage and the absence of dangerous mercury and explosion hazard, they could be ideal light sources for inexpensive, compact, portable projection systems that even can be run on batteries. The robustness of the light source will result in robust projectors with low maintenance cost.

LEDs are light sources with a narrow spectral emission band, nearly monochromatic, which will lead to a large color gamut. This will increase the number of possible color combinations and thus the image quality. The contrast can be improved by a unique property of LEDs, namely unlike UHP lamps they have a large dimming ratio. By dimming the LEDs for dark images the dynamic range will be adapted and will result in very high contrast. This technique is known as 'Adaptive Dynamic Range Control' and is used in classic projectors. The dimming happens there with a mechanical shutter and will be thus easier and faster with LEDs. Another very interesting aspect is the fact that LEDs can be switched rapidly, meaning that LEDs can be pulsed. Pulsing is a very interesting property in case of color sequential architecture, but it can also be used to get a higher light flux in three panel system.

However, there is also an important disadvantage. LED intensities are still too low for actual projection application. The optical power per unit of étendue of a LED is also significantly lower than that of an UHP lamp (approximately 50 times). Even the brightest LEDs cannot equalise the efficiency of this arc lamp. Nowadays this problem is the bottleneck of the LED based projection systems.

An idea that is formulated on many occasions is to combine the light coming from different LEDs in order to increase the light output. The major problem is that most methods to combine the light coming from two separate light sources also add up the étendue of the two light beams. There are a number of known ways to combine two or more light sources without increasing the resulting étendue.

One method is to use a polarising beam splitter (PBS) to combine two light beams with mutually orthogonal linear polarisation, yielding a single beam with mixed polarisation. Unfortunately, this cannot be used for liquid crystal based projectors, because one needs polarised light in order for the light valve to work. Furthermore, LEDs produced today do not generate polarised light, so in order to generate the linearly polarised light, one would first have to split the unpolarised light into two beams with mutually orthogonal polarisation. This would double the étendue of the original light beam, so one ends up with a break-even situation at best. Still, the technique could be used with lasers (which usually do generate polarised light), provided a polarisation-insensitive light valve is used (such as a DLP valve) .

A second method is to use an X-Cube or a set of dichroic mirrors and to combine the light coming from light sources with non-overlapping spectra (different colours). For example, a standard X-cube can combine a red, a green and a blue beam into a single white beam with the same étendue. In fact, this technique is already used in all 3-valve projectors. In the case of using UHP lamps, the white light from the lamp is first split into a red, a green and a blue channel, which implies a tripling of the beam étendue, and later it is recombined again to a single beam using an X-Cube. In the case of monochromatic light sources, such as LEDs, each of the light sources is allowed to have the same étendue as the UHP lamp. This is in fact an unlisted advantage of LEDs versus UHP lamps: the light output of the UHP lamp has to be compared with the light output of the red, green and blue LEDs together.

EP 1395064 discloses a projector system, which uses LEDs as the light source. In this document, the LEDs are mounted on a movable support, which is designed to bring the LEDs alternately in front of the optical system. The LEDs are pulsed alternately in order to obtain a higher flux. In an alternative embodiment, a rotatable mirror placed at an angle of 45° is used to reflect the light of alternately pulsed LEDs placed on the inner surface of a cylinder, to guide the light to the optical system of the device. The functioning of this device depends heavily on timing between mechanical elements (positioning devices, mirror rotation) and electronic components (LEDs). Also, mechanical elements are known to fail more easily and to be subject to wear. Further, such a device would be very costly.

To solve the problems mentioned above, another light source is needed.

### Aims of the invention

The present invention aims to provide a novel projection system light source, which is cheap and efficient and does not show the disadvantages of a classic UHP light source as described above. A further aim is to provide a light source, which is robust and does not rely on mechanical elements.

The present invention also aims to provide a novel method for improving the LED light source intensity for a projector system.

### Summary of the invention

The present invention concern a projection system as defined in Claim 1.

Preferably, said projection system according to the present invention is an image projector system, in particular a light valve projector.

The projection system of the present invention preferably comprises a switch to alternately empower said light sources. Advantageously, said switch is an electronic circuit.

The power source is preferably arranged to empower the light emitters with a current pulse.

Said light emitter is preferably a light emitting diode (LED) or a laser.

In a preferred embodiment of the present invention, the light emitters are positioned orthogonal with respect to each other.

The projection system of the present invention can of course comprise a plurality of light sources as described above, arranged to be optically positionable alternately in a first position and a second position by an optical positioning means wherein said optical positioning means is arranged to change the light emission from said light sources to a preferred optical path.

Another aspect of the present invention concerns a method for providing light to a projection system, as defined in Claim 12.

The step of repositioning is performed using a PBS and a switchable device arranged to rotate the polarisation direction of the light over a specified angle.

### Short description of the drawings

Fig. 1 represents a theoretical comparison chart between the average light flux from a continuously driven LED and from the same LED, in a pulsed system.

Fig. 2 represents the effects of the combining of the light from to alternately pulsed LEDs.

Fig. 3 shows a comparative example comprising two orthogonally positioned LEDs and a rotating mirror.

Fig. 4. shows an extended version of the example of figure 3.

Fig. 5 shows the measurement system used for experimentally measuring the gain with a setup according to the present invention.

Fig. 6 shows an electronic circuit that can be used to drive the pulsed LED system according to the present invention.

Fig. 7 shows the experimentally obtained results for a setup as in figure 5.

Fig. 8 shows an extended system with 4 alternately pulsed LED's at 25% duty cycle

### Detailed description of the invention

In the present invention, a new projector system is disclosed. Furthermore, a new method of combining the light from different light sources without increasing the étendue is disclosed.

The following description will recite a LED (light emitting diode). It is however understood that this is only for the purpose of having an example and it is understood that the term "LED" can be replaced by any other light source, e.g. a laser.

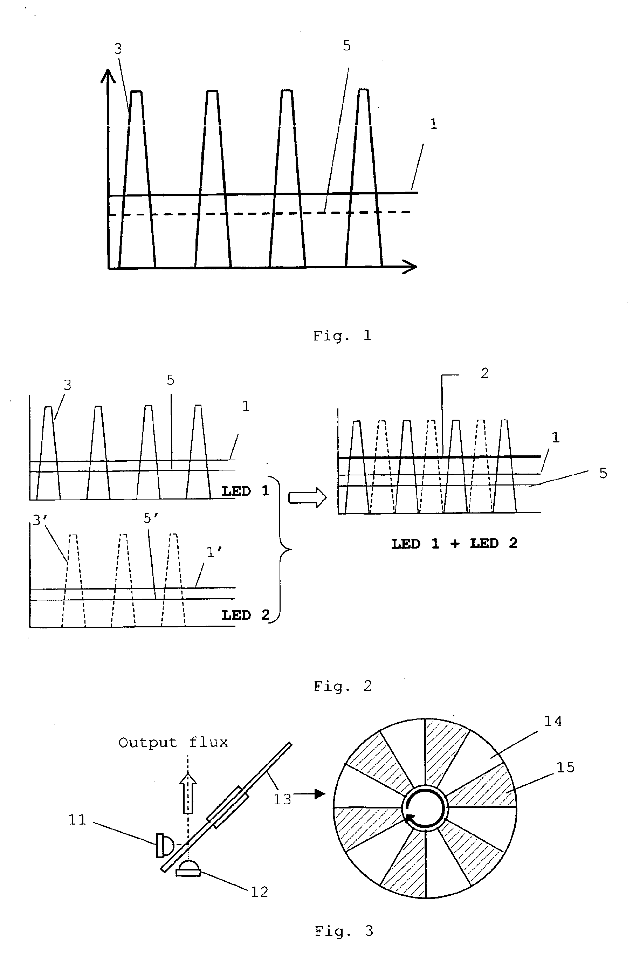

A single LED or another single light source can be operated in a pulsed mode. The power limitation of the LED is partly related to thermal effects (heating) : if the driving current is increased above a certain value, the LED will heat up too much and will deteriorate quickly of even fail. In high-power LED applications, much attention is given to the thermal housekeeping of the LED and its package, so that the cooling is optimal. This allows for higher driving currents and hence higher light output. Operated in pulsed mode, a LED is operated during a short time, and then given the opportunity to cool down, after which the cycle is repeated. Depending on the duty ratio and the repetition frequency, the maximum allowable drive current can be higher or much higher than in continuous driving mode. The peak light output (3, see figure 1) will consequently also be higher. In general however, the mean light output (5*,* integrated over a complete cycle*,* see figure 1) is not higher than the output in the case of continuous drive (1, see figure 1).

To increase the optical power a number of possible solutions can be formulated. The output power of a LED can be increased by increasing the radiating area. By multiplying ten times the active region, the flux, but also LED's étendue, will been multiplied almost by ten. This gain will not contribute to the output flux because the throughput of a projector is determined by the system étendue. This is usually defined by the F-number of the projection lens and the area of the micro display. The étendue of the light source should not be larger than the system étendue. So enlarging the active region will not result in increased throughput if the LED étendue is larger than the system étendue.

A better method is increasing the flux within the same étendue. This can be done by combining several LEDs or by pulsing the LEDs . Several LEDs can be combined within the same étendue, if they have different wavelengths (spectra) or different polarization.

To increase the average luminance, one can combine several LEDs, pulsed alternately, so one can combine LEDs with the same wavelength and putting them (physically or optically) in a certain preferred position during the time interval that they are pulsed. Their increased flux can be added up in time and will generate a higher average flux within the same étendue. This can be carried out in a number of different configurations and is illustrated in figure 2. LEDs 1 and 2 have an average light output 1 and 1'. When pulsed, peak output 3 and 3'is observed, but on the average light output 5 and 5' of the LEDs separately is lower than the average continuously driven output 1 or 1'. When alternately pulsing LEDs 1 and 2 and combining the peak output 3 and 3', a higher average output 2 is obtained.

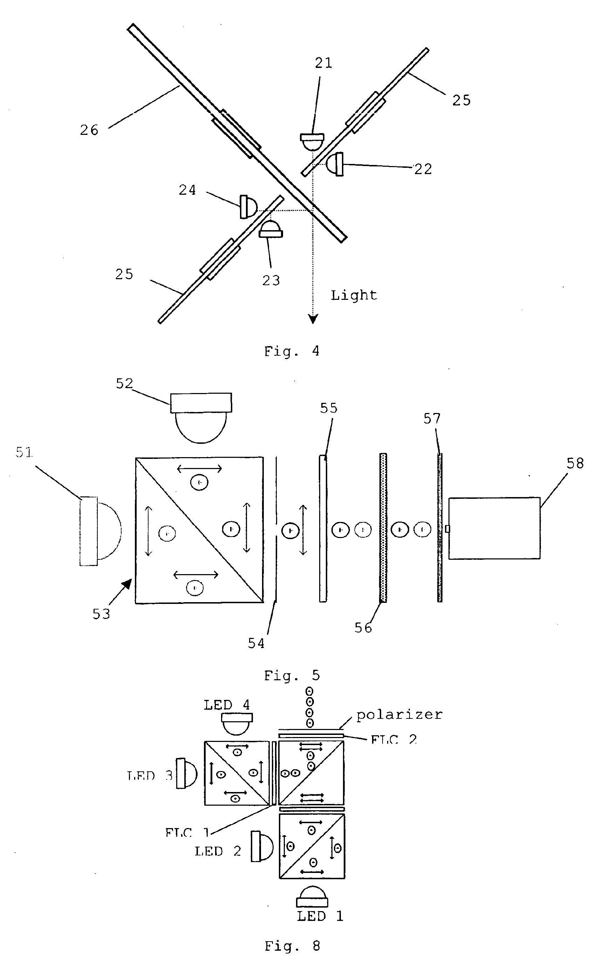

An example of such a configuration is shown in figure 3. Here one works with two LEDs (11,12) that are positioned orthogonal to each other. A rotating mirror wheel (13) that consists of mirroring (15) and transparent segments (14) is positioned in the bisector plane formed by the two LEDs. Each LED is working at a 50% duty ratio. When a mirroring segment is between the LEDs, the horizontal LED is pulsed, when a transparent segment is between the LED's, the vertical LED is pulsed. This results in a light beam that appears to be generated by a single vertical LED. This approach can also be expanded to 4, 8, etc. LEDs as illustrated in figure 4 but the architecture rapidly become larger and more complicated. For example in figure 4, to operate 4 LEDs (21, 22, 23, 24) one needs two three rotating mirrors (25, 26) to combine the light of all LEDs.

An important disadvantage of this kind of solutions is the presence of moving parts. In optical systems, moving parts are undesirable. They always show slowness, can cause extra errors (alignment) and will wear out more quickly.

An alternative on the system with two LEDs without moving components according to the invention comprises a PBS (polarising beam splitter) and a switchable retarder (half wave plate filter). By alternately pulsing the LED's with 50% duty cycle and changing the polarization of one LED with a switchable retarder, one can combine the flux of both LEDs in the same étendue. The output beam will have a constant polarization and the other polarization, which in any case should be filtered out before the imager, will be lost. The retarder should synchronously switch on and off with the LEDs and should have very small transition time to have a minimal loss. Because of its fast switching time a ferroelectric retarder (FLC) can be used here. The following example shows a possible setup and the principle of this system. Other retarder possibilities include an LC (liquid crystal), Kerr and Pockels cells, or a Faraday rotator.

### Example 1: test setup for measuring

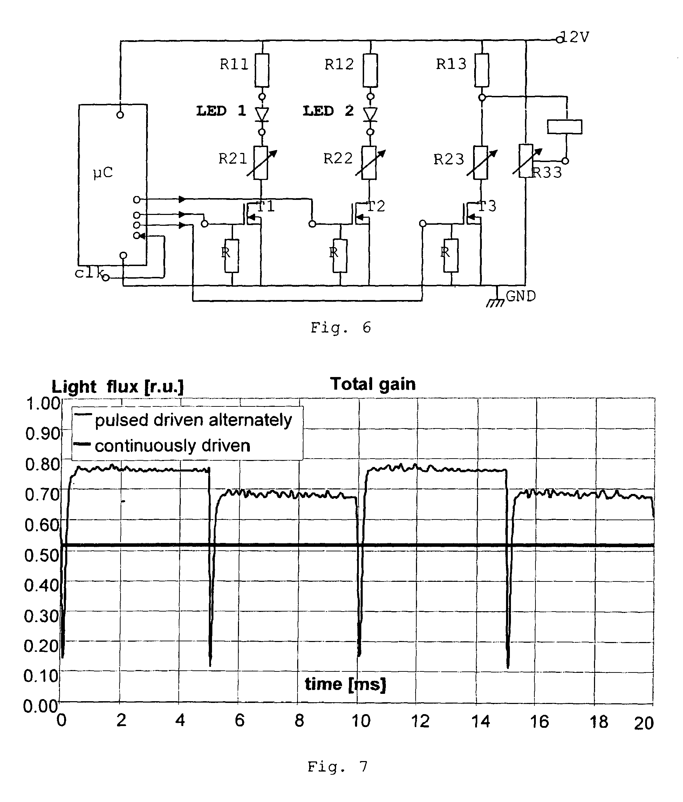

Referring to fig. 5, LED 1 (51) and LED 2 (52) can be pulsed alternately and have to be synchronous. The pulsed current depends on the duty cycle and the type of the LEDs. Luxeon V Emitter Lambertian green is used in this example. Green is the limiting LED if one wants to build a three panel projector with red, green and blue Lumileds. The continuous driving current is 700mA and the consumed power is about 5W. If the duty cycle is 50% with the same electrical power, the pulsed driving current has to be 1260mA, and in case of 33% duty cycle 1750mA. That was determined experimentally. Because of high consumed powers, fans are used to cool down the LEDs. An electronic circuit that can manage such high currents is shown in figure 6. This circuit also provides synchronized signals for LED 1, LED 2 and the FLC (55). This circuit will be discussed below.

The FLC (55) used in this example is a product of Displaytech. It has a clear aperture of 25.4 mm and is optimized for the entire visible region. The broadband spectral response is greatly improved by sacrificing peak contrast. On both sides an anti reflection coating is added. The FLC has two states that can be switched with a square wave with amplitude of 5V (between + and - 5V). This is also realized with the same circuit that drives the LEDs. In the off state (-5V) the FLC is transparent and in the on state (+5V) it will act as a half wave plate, thus changing the polarization of the incoming light. The FLC (55) can be switched very fast compared with a normal liquid crystal cell.

The detector (58) used is an Avalanche Photo Diode (APD) from Hamamatsu (c5460-01) with a small active region. This device is ultra sensitive and will saturate if the light beam is not attenuated. Therefore an attenuator (57) is placed in front of the detector (58). Also included is a diaphragm (54) after the PBS (53) to reduce the light spot to the size of the detector's active area. With the polarizer (56) (analyzer) between the FLC (55) and the attenuator (57), one can select which polarization state will be passed to the detector (58).

The PBS (53) in the setup has anti reflection coatings on all faces. This will minimize losses. It readily polarizes the beam and passes p polarization for LED 1 (51) and s polarization for LED 2 (52). After going through the diaphragm (54), the beam passes through the FLC (55). The FLC (55) is driven in such a way that it will pass the beam (s polarization) from LED 2 (52) and change the polarization of the beam from LED 1 (51) (from p into s polarization). Afterwards the beam will pass through the analyzer (56) that is oriented in the direction of the incoming s polarized beam. After attenuation (57) the optical power is converted into a voltage by the detector and measured with the oscilloscope. This voltage value is a relative indication for the quantity of the flux that falls in the detector (58).

It was already mentioned that there are two crucial items that have to be taken into account when designing the driving circuit, namely the current that the circuit should deliver and the synchronization of the three channels (LED1, LED2 and FLC). Another important item is the velocity of switching. The circuit that is designed exists of two parts and is shown in figure 6.

The electronic part is a transistor circuit where the transistors are used as switches. The transistors used are high speed switching types with high current capabilities. This is needed to pulse at high currents (up to 1.75A). For LED 1 en LED 2 two identical circuits are designed. R11 (R12) is a monitor resistance to measure the adjusted current. This current will be programmed by an adjustable resistance R21 (R22). The third part is used to drive the FLC. R13 is 100Ω and will provide a potential difference of 10V if the current is adjusted at 100mA, which is done using R23. The potential at one terminal of the FLC will be switched between 12V (off) and 2V (on). The other terminal is set at 7V by R33. The transistors will only be switched when the gates become digitally high (5V). This will be done through the signals coming from the second part, the firmware part, of the circuit. For this a micro controller is used. The micro controller (*µ*C) has an internal clock signal of 12 MHz and will be very accurate in timing. This was needed for synchronization. Even the three pins of the *µ*C that will drive the gates will be written exactly at the same time. Another advantage of a *µ*C system is the flexibility of the desired triggering signal and the ease of adaptation. For example, one can change the duty cycle from 50% to 33% without any change of the circuit, by loading another assembler code. With an extern clock signal the frequency will be determined.

For the above setup, in a duty cycle of 50%, 135,8% polarised light was obtained (compared to a continuously driven LED), so about 36% more light. There are losses in the system, more in particular due to e.g. non-ideal characteristics of the LEDs and loss of light in the PBS and the FLC. The graph of the measurements can be seen in figure 7.

Though the gain is substantially good, it can still be improved. The major loss is due to the pulsing efficiency and will always occur but can perhaps be reduced by improvements of the LED technology. The performance of the PBS can also be raised by optimizing it for one wavelength and using a better PBS, so this loss can be reduced by factor 2 to 3. The loss of the FLC can also be decreased a little bit by using another square signal to drive it. The FLC should be driven for a very short time (tens of microseconds) with higher voltage up to +/-15V. Longer period at this voltage can damage the FLC.

This system can be expanded to increase the total gain. A possible expansion is shown in figure 8.

In this architecture the LEDs should be pulsed with 25% duty cycle. The pulsing loss will higher but by combining 4 LED's the overall gain will be higher. Additional losses will occur, namely there is one PBS and one FLC more used in the setup. The FLCs at the first stage (FLC1) have to switch twice as fast as the FLC in the second stage (FLC2) (and the FLC used in the two-LED setup). This will also cause some losses. The estimated gain is about 69% (nearly double as before), at the expense of a larger, more complicated and more expensive architecture. More elaborate systems with 2ⁿ LEDs are possible, using the 2 LED or 4 LED systems described above as building blocks and combining the light emitted by such building blocks in a similar way.

Timing issues are important. Depending on LED on time and transition times for the switchable retarder, the driving circuit has to be designed such to allow a flicker-free image. Typical values for LED on time is < 100 ns. The LED off time is less important and is typically situated around 1 *µ*s. The switchable retarder is also an important factor. An FLC typically has a transition time of 80 *µ*s. An LC has a much higher transition time situated around a few ms. As most of these elements have short on or transition time characteristics, it is possible to work at a frequency of e.g. 100 Hz to provide a flicker-free light source.

In case a relatively slow switchable retarder is used, it is possible to work at lower frequencies (such as 10 Hz) in order to increase the LED on period and to reduce the switching per second. A switching time of 2 ms and a LED on period of 50ms, working at 10 Hz can provide a flicker-free light source.

## Claims

1. A projection system comprising a light source, said light source comprising:
- a polarising beam splitter (PBS, 53) for combining the flux of two light emitters in the same étendue and a switchable retarder located downstream of the polarising beam splitter, and arranged to rotate the polarisation direction of the light over a specified angle,
- at least two light emitters (LED 1, LED 2; 51, 52) arranged to alternately light two inputs of the polarising beam splitter ,
- a power source arranged to empower said light emitters,
wherein said switchable retarder is arranged to be synchronously switched on and off with the said two emitters such as to pass the beam from one light source and change the polarisation of the beam of the other light source.

2. The projection system of claim 1, wherein said switchable retarder is an FLC.

3. The projection system of any of the claims 1 to 2, wherein said projection system is an image projector system.

4. The projection system of the claims 3, wherein said image projector system is a light valve projector.

5. The projection system of any of the claims 1 to 4, comprising a switch to alternately empower said light sources.

6. The projection system as in claim 5, wherein said switch is an electronic circuit.

7. The projection system of any of the claims 1 to 6, wherein the power source is arranged to empower the light emitters with a current pulse.

8. The projection system of any of the claims 1 to 7 wherein said light emitter is a light emitting diode (LED) or a laser.

9. The projection system of any of the claims 1 to 8 wherein the emitting surfaces of the light emitters are positioned orthogonal with respect to each other.

10. The projection system of claim 1 or 2 further comprising a polarizer positioned between the light source and the PBS.

11. The projection system of any of the claims 1 to 10, comprising a plurality of light sources as in claim 1, arranged to be optically positionable alternately in a first position and a second position by an optical modification means wherein said optical modification means is arranged to change the light emitted from said light sources to a preferred optical path.

12. A method for providing light to a projection system, comprising the steps of:
- providing a projection system as in claim 1,
- alternately pulsing the light emitters and synchronously switching the switchable retarder on and off, such as to pass the beam from one light source and change the polarisation of the beam of the other light source, thereby obtaining a combined flux of the two light emitters in the same étendue.

## Patentansprüche

1. Projektionssystem, eine Lichtquelle umfassend, wobei die Lichtquelle Folgendes umfasst:
- einen polarisierenden Strahlenteiler (PBS, 53) um den Fluss von zwei Lichtsendern in der gleichen Ausdehnung zu kombinieren und einen schaltbaren Verzögerer, der sich nachgeordnet vom polarisierenden Strahlenteiler befindet, und angeordnet ist um die Polarisierungsrichtung des Lichts über einen bestimmten Winkel zu drehen,
- mindestens zwei Lichtsender (LED 1, LED 2; 51, 52) die angeordnet sind, um alternativ zwei Eingaben des polarisierenden Strahlenteilers zu beleuchten,
- eine Stromquelle die angeordnet ist um die Lichtsender mit Strom zu versorgen,
wobei der schaltbare Verzögerer angeordnet ist um mit den zwei Sendern synchron ein- und ausgeschaltet zu werden um den Strahl von einer Lichtquelle zu leiten und die Polarisierung des Strahls der anderen Lichtquelle zu ändern.

2. Projektionssystem nach Anspruch 1, wobei der schaltbare Verzögerer ein FLC ist.

3. Projektionssystem nach einem der Ansprüche 1 bis 2, wobei das Projektionssystem ein Bildprojektorsystem ist.

4. Projektionssystem nach Anspruch 3, wobei das Bildprojektorsystem ein Lichtventilprojektor ist.

5. Projektionssystem nach einem der Ansprüche 1 bis 4, einen Schalter umfassend um alternativ die Lichtquellen mit Strom zu versorgen.

6. Projektionssystem nach Anspruch 5, wobei der Schalter ein elektronische Schaltung ist.

7. Projektionssystem nach einem der Ansprüche 1 bis 6, wobei die Stromquelle angeordnet ist um die Lichtsender mit einem Strompuls zu versorgen.

8. Projektionssystem nach einem der Ansprüche 1 bis 7 wobei der Lichtsender eine Lichtemissionsdiode (LED) oder ein Laser ist.

9. Projektionssystem nach einem der Ansprüche 1 bis 8 wobei die Sendeflächen der Lichtsender orthogonal mit Bezug aufeinander angeordnet sind.

10. Projektionssystem nach Anspruch 1 oder 2 weiter einen Polarisierer umfassend der zwischen der Lichtquelle und dem PBS angeordnet ist.

11. Projektionssystem nach einem der Ansprüche 1 bis 10, eine Vielzahl von Lichtquellen wie in Anspruch 1 umfassend, angeordnet um optisch durch ein optisches Modifizierungsmittel alternativ in einer ersten Position und in einer zweiten Position angeordnet werden zu können, wobei das optische Modifizierungsmittel angeordnet ist um das Licht, gesendet von der Lichtquelle, zu einem bevorzugten Lichtpfad zu ändern.

12. Verfahren zur Bereitstellung von Licht an ein Projektionssystem, die folgenden Schritte umfassend:
- Bereitstellen eines Projektionssystems wie in Anspruch 1,
- alternativ Pulsieren der Lichtsender und synchron Ein- und Ausschalten des schaltbaren Verzögerers, um den Strahl von einer Lichtquelle zu leiten und die Polarisierung des Strahls der anderen Lichtquelle zu ändern, wodurch ein kombinierter Fluss der zwei Lichtsender in der gleichen Ausdehnung erhalten wird.

## Revendications

1. Système de projection comprenant une source de lumière, ladite source de lumière comprenant :
- un séparateur de faisceau polarisant (PBS, 53) pour combiner le flux de deux émetteurs de lumière dans la même étendue et un retardateur commutable situé en aval du séparateur de faisceau polarisant et conçu pour faire tourner la direction de polarisation de la lumière sur un angle spécifié,
- au moins deux émetteurs de lumière (LED 1, LED 2 ; 51, 52) conçus pour éclairer en alternance deux entrées du séparateur de faisceau polarisant,
- une source d'énergie conçue pour activer lesdits émetteurs de lumière,
dans lequel ledit retardateur commutable est conçu pour être mis sous tension et hors tension de façon synchrone avec lesdits deux émetteurs de sorte à laisser passer le faisceau depuis une source de lumière et à transformer la polarisation du faisceau de l'autre source de lumière.

2. Système de projection selon la revendication 1, dans lequel ledit retardateur commutable est un FLC.

3. Système de projection selon l'une quelconque des revendications 1 à 2, dans lequel ledit système de projection est un système de projection d'image.

4. Système de projection selon la revendication 3, dans lequel ledit système de projection d'image est un projecteur à valve de lumière.

5. Système de projection selon l'une quelconque des revendications 1 à 4, comprenant un commutateur pour activer en alternance lesdites sources de lumière.

6. Système de projection selon la revendication 5, dans lequel ledit commutateur est un circuit électronique.

7. Système de projection selon l'une quelconque des revendications 1 à 6, dans lequel la source d'énergie est conçue pour activer les émetteurs de lumière avec une impulsion de courant.

8. Système de projection selon l'une quelconque des revendications 1 à 7, dans lequel ledit émetteur de lumière est une diode électroluminescente (DEL) ou un laser.

9. Système de projection selon l'une quelconque des revendications 1 à 8, dans lequel les surfaces émettrices des émetteurs de lumière sont positionnées de manière orthogonale les unes par rapport aux autres.

10. Système de projection selon la revendication 1 ou 2, comprenant en outre un polariseur positionné entre la source de lumière et le PBS.

11. Système de projection selon l'une quelconque des revendications 1 à 10, comprenant une pluralité de sources de lumière selon la revendication 1, conçues pour être optiquement positionnables en alternance dans une première position et une seconde position grâce à des moyens de modification optique, lesdits moyens de modification optique étant conçus pour transformer la lumière émise par lesdites sources de lumière en un chemin optique préféré.

12. Procédé pour fournir de la lumière à un système de projection, comprenant les étapes suivantes :
- la fourniture d'un système de projection selon la revendication 1,
- l'envoi en alternance d'une impulsion aux émetteurs de lumière et la mise sous tension et hors tension du retardateur commutable de façon synchrone, de sorte à laisser passer le faisceau depuis une source de lumière et à transformer la polarisation du faisceau de l'autre source de lumière, obtenant ainsi un flux combiné des deux émetteurs de lumière dans la même étendue.
